# FASCICULE DE BREVET EUROPEEN

(11) **EP 2 395 817 B1**
(45) Date de publication et mention de la délivrance du brevet: **19.02.2020**
(21) Numéro de dépôt: 11360023.3
(22) Date de dépôt: 14.06.2011
(51) Int. Cl.: H05B 37/02, H04L 12/10

(54) **Dispositif d'interfaçage entre un détecteur de mouvement pour bus KNX et des luminaires utilisant un bus DALI**
Schnittstellenvorrichtung zwischen einem Bewegungsmelder für KNX-Bus und einen DALI-Bus verwendende Leuchten
Interface device between a motion sensor for KNX bus and the lights using a DALI bus

(30) Priorité: 14.06.2010 FR 1054682
(43) Date de publication de la demande: 14.12.2011
(73) Titulaire: HAGER CONTROLS, 67700 Saverne (FR)
(72) Inventeur: Woelffel, Vincent, 67670 Mommenheim (FR); Deiber, Claude, 67140 Stotzheim (FR); Frommweiler, Olivier, 67700 Otterswiller (FR)
(74) Mandataire: Nuss, Laurent

(56) Documents cités:
- EP-A2- 0 838 791
- EP-A2- 1 422 917
- EP-A2- 1 734 636
- WO-A1-2009/133489
- DE-A1-102005 021 785
- DE-U1-202005 021 023
- US-A1- 2004 002 792

## Description

La présente invention a trait à un dispositif d'interfaçage entre un détecteur de mouvement pour bus KNX et des luminaires. Il s'agit en l'espèce d'associer à un simple détecteur une interface de commande d'un réseau d'appareils d'éclairage, qui sont en pratique soit directement connectés au secteur, soit indirectement commandés via un bus par exemple de type DALI.

Jusqu'à présent, le détecteur est associé à une interface de commande d'appareils d'éclairage connectée au bus KNX, comme cela est par exemple divulgué dans le brevet EP 0 838 791 ou EP 1 422 917. En fin de compte, toutes les informations s'échangeant entre le détecteur et les luminaires transitent par un même bus KNX, en émission et en réception. Il existe également des adaptateurs entre un bus KNX et un bus ETHERNET, tel que décrit dans le brevet DE 10 2005 021 785.

L'objectif de la présente invention est de « relier » deux mondes différents, à savoir le monde du détecteur associé au bus KNX, et le monde des luminaires associés au bus DALI par exemple ou au secteur. Ces luminaires n'ont donc aucun raccordement avec le bus KNX à l'origine. La création d'un lien entre les deux mondes est nécessaire pour faire fonctionner les luminaires en relation avec le détecteur. Ce lien est réalisé grâce au dispositif d'interfaçage selon l'invention.

Ce dispositif d'interfaçage est bien différent d'une passerelle ou d'un pont, et a pour objet de répercuter un événement (présence détectée) à un étage de commande. Il n'a pas pour but de procéder à la conversion de codes dynamiques de commande entre deux bus, ou entre deux technologies de bus différentes.

Concrètement, le dispositif complet comporte une carte électronique permettant de commander les luminaires et une carte électronique gérant un détecteur de mouvement compatible KNX, basé sur un microcontrôleur alimenté par le bus KNX et doté de tous les périphériques d'entrée / sortie permettant d'assurer la fonction de détection.

Le module KNX assurant la détection est dès lors utilisé à titre principal pour fournir des informations de commande des luminaires raccordés en aval au secteur. Secondairement, il peut être mis à contribution pour assurer une fonction d'alimentation du circuit de commande des luminaires.

Pour réaliser ces objectifs, et d'autres qui apparaîtront dans la suite, le dispositif d'interfaçage selon l'invention se caractérise à titre principal en ce qu'il comporte :
- un étage de commande des luminaires connecté entre le microcontrôleur du détecteur et le réseau des luminaires ;
- un étage d'alimentation de l'étage de commande, et ;
- un étage d'isolation en tension.

Selon une configuration possible de l'invention, l'état desdits luminaires est contrôlé et commandé via un bus DALI. Dans cette hypothèse, l'étage d'alimentation est raccordé au secteur et fournit une alimentation pour le bus DALI et une alimentation linéaire pour le fonctionnement d'au moins un composant de l'étage de commande, ce dernier étant connecté entre le microcontrôleur du détecteur et les fils du bus DALI.

La commande des luminaires est donc effectuée via le protocole DALI, permettant une gestion optimisée de l'éclairage par l'intermédiaire du bus du même nom. L'allumage, l'extinction et la variation de l'éclairage sont commandés via ce bus.

Dans une telle configuration, l'étage d'alimentation peut être composé d'une première alimentation à découpage raccordée au secteur et fournissant une double alimentation pour le bus DALI et pour une seconde alimentation linéaire.

Selon une possibilité, l'alimentation à découpage est un montage de type convertisseur Flyback comportant un transformateur à double enroulement de primaire et à double enroulement de secondaire en série, un étage de redressement étant disposé entre le secteur et le double enroulement primaire en série avec un commutateur, et des étages de redressement/stabilisation de tension étant placés en aval de chacun des enroulements secondaires, fournissant une alimentation tension/courant respectivement au bus DALI et à la seconde alimentation linéaire.

L'utilisation d'un tel convertisseur permet une consommation à vide plus faible et un meilleur rendement.

La seconde alimentation, qui est prévue pour la polarisation des composants et circuits de l'étage de commande, fonctionne en cascade avec l'alimentation à découpage. Cette dernière lui fournit une tension proche de celle que la seconde alimentation délivre, qu'elle ajuste et régule en vue de l'alimentation des composants électroniques.

L'étage de commande du dispositif d'interfaçage selon l'invention comporte quant à lui un circuit de réception des données en provenance du bus DALI, relié à la seconde alimentation, et un circuit de transmission de données à destination du bus DALI, ces circuits étant connectés au microcontrôleur via l'étage d'isolation en tension et au bus DALI via un étage de protection contre les surtensions.

L'objectif est de garantir l'échange des informations sur le bus DALI, tout en protégeant l'étage de commande contre les surtensions.

Par ailleurs, la fonction d'isolation a en fait pour but d'isoler les parties fonctionnelles d'échange d'informations avec le bus DALI par rapport au bus KNX. La particularité de ce montage, impliquant des cartes électroniques disposées entre un bus KNX et un bus DALI, réside en effet notamment dans la nécessité d'isoler le bus KNX par rapport au bus DALI.

L'étage de protection contre les surtensions peut de surcroît être connecté à un étage de protection contre les surcharges activable par un signal véhiculé par une ligne de commande d'activation issue du microcontrôleur.

Selon une configuration possible, l'isolation en tension entre les bus DALI et KNX est réalisée au moyen d'opto-coupleurs disposés sur les lignes de connexion du circuit de réception de données et du circuit de transmission de données au microcontrôleur ainsi que sur ladite ligne de commande d'activation.

Selon une seconde variante, la commande des luminaires ne se fait pas par l'intermédiaire d'un bus de type DALI. Elle se fait alors plus directement, au moyen d'un étage de commande comportant un amplificateur raccordé au microcontrôleur et dont le signal de sortie est connecté à un relais commandant les luminaires raccordés au secteur.

Dans cette hypothèse, l'étage d'alimentation comporte bien entendu une alimentation pour le relais, qui est raccordée au bus KNX via un montage limiteur de courant et une inductance électronique.

Cette dernière permet une adaptation d'impédance dynamique, le montage étant prévu pour s'opposer à la variation du courant de manière à ne pas perturber les communications sur le bus KNX.

Le limiteur de courant sert à faire chuter la consommation de courant lors d'un front montant de la tension bus, et aussi à limiter le courant maximal instantané consommé sur le bus.

Selon une possibilité, l'étage d'alimentation comporte de plus une capacité réservoir pour le relais.

Les objectifs sont de fournir une tension d'alimentation pour un relais bistable classique, ainsi que le courant nécessaire à la charge de la capacité réservoir du relais, courant de surcroît limité à une valeur maximale pour respecter une consommation maximale du produit, d'où le circuit limiteur de courant dont il a été fait état ci-dessus.

Selon l'invention, la commande du relais est réalisée par un pont de transistors en H, la bobine du relais étant connectée entre deux paires de transistors bipolaires du type respectivement PNP-NPN associés, le collecteur des transistors PNP étant raccordé à la tension d'alimentation issue de l'étage d'alimentation et les bases des transistors NPN étant reliées respectivement à une sortie MARCHE et ARRET du microcontrôleur.

L'invention va à présente être décrite plus en détail, en référence aux figures, pour lesquelles :
- la figure 1 représente un schéma synoptique d'un module détecteur de présence KNX associé à un dispositif d'interfaçage selon l'invention, dans la version comprenant un bus DALI contrôlant et commandant des luminaires ;
- la figure 2 est un schéma synoptique plus précis du dispositif d'interfaçage de l'invention, dans la version de la figure 1 ;
- la figure 3 est un schéma synoptique général d'un module détecteur de présence KNX avec un dispositif d'interfaçage à relais ;
- la figure 4 montre un schéma synoptique plus détaillé du dispositif d'interfaçage de la seconde version à relais ; et
- la figure 5 représente le circuit de commande du relais utilisé dans le cadre de l'invention.

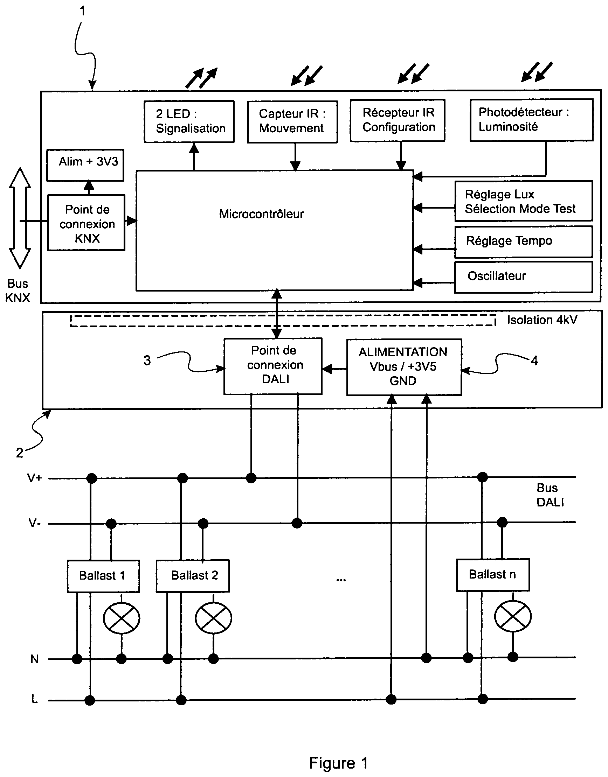

En référence à la figure 1, l'association de cartes électroniques, permettant d'une part la détection de présence via un module détecteur classique KNX et d'autre part l'interfaçage avec un bus DALI, apparaît clairement. Le module détecteur (1) comporte classiquement un microcontrôleur central recevant et envoyant des signaux à destination de périphériques fonctionnels. Ainsi, il est à titre principal connecté à un bus KNX via un point de connexion KNX, qui est en réalité un circuit réalisant l'interfaçage entre ledit bus KNX et le microcontrôleur, qui met en particulier en œuvre une adaptation d'impédance dynamique.

Pour ce qui concerne la fonction détection, le microcontrôleur reçoit un signal d'un capteur infrarouge qui détecte les mouvements de personnes se déplaçant dans son cône de détection.

Un photo-détecteur permet de mesurer la luminosité ambiante, et d'activer le cas échéant la détection si la luminosité tombe sous un seuil dit crépusculaire. Le récepteur infrarouge permet la configuration du capteur, et notamment l'adaptation de sa sensibilité.

Un oscillateur sert de base de temps, notamment pour le réglage d'une temporisation, lorsque le détecteur est utilisé à l'instar d'une minuterie. Le réglage de la luminosité est notamment effectué au moyen d'un potentiomètre.

Enfin, le microcontrôleur envoie des signaux à l'adresse de LEDs de signalisation indiquant que le module détecteur est en fonctionnement.

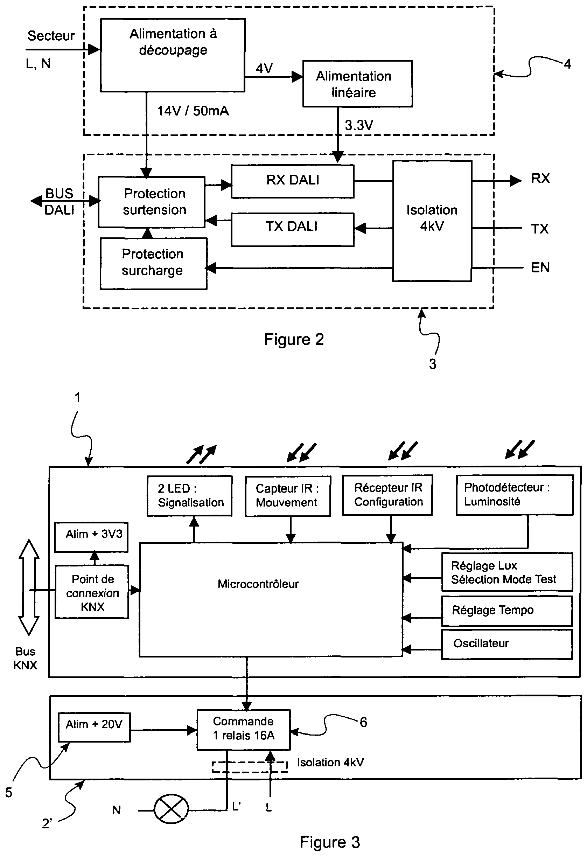

L'invention proprement dite réside dans la carte électronique associée, qui comporte un point de connexion DALI, et qui est de fait un circuit d'interfaçage (2) entre un microcontrôleur et le bus DALI, nécessitant une alimentation qui est double comme cela est manifeste à la lumière de la figure 2. Une première alimentation est celle du bus DALI, une seconde alimentation stabilisée servant à la polarisation de certains des composants du circuit formant le point de connexion DALI.

Cette double alimentation est obtenue à partir de la tension du secteur transformée à l'aide d'un montage convertisseur classique permettant d'obtenir par découpage des caractéristiques d'alimentation adéquates pour le bus.

Le bus DALI commande les ballast 1, 2, ...n contrôlant des luminaires correspondants. Les charges, constituées d'un ballast et d'un luminaire, sont alimentées par un double circuit, un circuit de puissance constitué du secteur et un circuit de commande constitué du bus DALI.

Les étages d'alimentation (4) et de connexion (3) avec le bus DALI sont représentés plus en détail en figure 2. Ainsi, l'étage d'alimentation (4) est à titre principal constitué d'une alimentation à découpage, fournissant d'une part un couple tension de 14 V / courant de 50 mA apte à alimenter de l'ordre de 25 ballasts sur le bus DALI. Il s'agit d'un convertisseur de type Flyback à très basse consommation à deux bobinages secondaires pour fournir également du 4 V / 20 mA, ensuite transformés via une alimentation linéaire en 3,3 V, tension continue prévue pour polariser des composants de l'étage de connexion (3) avec le bus, qui est l'étage de commande des luminaires dans la configuration à bus DALI.

Cet étage (3) comporte à titre principal un montage de réception (RX) et un montage de transmission (TX) DALI respectivement connectés à des lignes (RX, TX) permettant l'échange d'informations entre le bus DALI et le microcontrôleur. Un étage d'isolation en tension, garantissant une isolation de 4 KV par rapport au bus KNX, est interposé sur les lignes (RX, TX), ainsi que sur une ligne (EN) reliée à un étage de protection contre les surcharges et contre les courts-circuits sur le bus DALI. Cet étage est relié à un circuit fournissant une protection contre les surtensions et les courts-circuits.

La figure 3 représente une variante du dispositif d'interfaçage (2') de l'invention, commandant des luminaires directement via au moins un relais bistable. Ce dispositif (2') est raccordé à une carte détecteur (1) strictement équivalente à celle qui est utilisée dans l'hypothèse de la figure 1. Le dispositif (2') selon l'invention comporte alors également un étage d'alimentation (5), tributaire du point de connexion KNX, et un étage de commande (6) d'un relais à 16 A, dont la sortie commande des luminaires via un étage d'isolation 4KV.

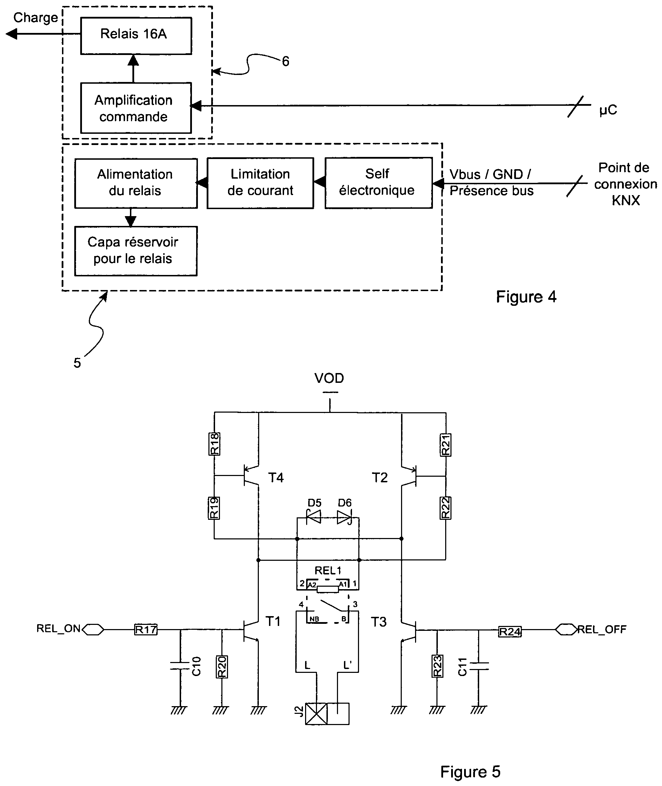

L'architecture plus précise du dispositif d'interfaçage (2') apparaît en figure 4. Ainsi, le point de connexion KNX est relié à l'étage d'alimentation (5) via trois fils reliés respectivement à la tension du bus et à la masse, et véhiculant pour le troisième un signal de présence de tension sur le bus KNX.

Cet étage (5) comporte, en entrée, une inductance électronique suivie d'un étage de limitation de courant servant respectivement à éviter les appels de courant sur le bus, de manière à rester conforme aux recommandations du standard KNX, et à ne pas dépasser une consommation globale de 10 mA en toute circonstance.

L'alimentation du relais s'effectue en 12 V, obtenus à partir de la tension de 20 V disponible dans le point de connexion KNX. La seule modification apportée à ce circuit consiste en l'adaptation de la tension disponible à la commande de la bobine du relais. Cet étage (5) génère également le courant nécessaire pour la charge de la capacité réservoir du relais, courant limité à une valeur maximale de 1 mA pour respecter une consommation maximale du circuit de 10 mA, comme mentionné auparavant.

L'étage de commande (6) proprement dit comprend, outre le relais standard 16 A, commandé sensiblement en 12 V, une amplification des signaux de commande issus du microcontrôleur.

Un circuit classique à pont de transistors en H utilisé à cet effet apparaît en figure 5. Pour fermer le relais (REL 1), la sortie du microcontrôleur REL_OFF étant à l'état bas, la sortie REL_ON passe à l'état haut, ce qui sature le transistor NPN T1, entraînant à son tour la saturation du PNP T2 : un courant circule alors dans la bobine du relais dans le sens A1 vers A2, et le relais se ferme.

Le principe est parfaitement symétrique pour l'ouverture du contact du relais, dans un fonctionnement faisant intervenir les transistors T3 et T4. Pour limiter les surtensions lors de la commutation, on place deux diodes Zener D5 et D6 tête-bêche en parallèle sur la bobine, avec une tension Zener supérieure à V_{DD} pour ne pas écrêter la tension de commande.

## Revendications

1. Dispositif d'interfaçage (2, 2') entre un détecteur de mouvement (1) pour bus KNX et des luminaires appartenant à un réseau, du type bus DALI, différent du bus KNX, ledit détecteur (1) comportant un microcontrôleur étant connecté au bus KNX, **caractérisé en ce que** le dispositif d'interfaçage (2, 2') comporte :
- un étage de commande (3, 6) des luminaires ;
- un étage d'alimentation (4, 5) de l'étage de commande (3, 6), et ;
- un étage d'isolation en tension disposé entre les luminaires et le microcontrôleur,
dispositif d'interfaçage (2, 2') **caractérisé en ce que** l'état desdits luminaires est commandé via un bus DALI, l'étage d'alimentation (4) étant raccordé au secteur et fournit une alimentation pour le bus DALI et une alimentation linéaire pour le fonctionnement d'au moins un composant de l'étage de commande(3) est connecté entre le microcontrôleur du détecteur et les fils du bus DALI.

2. Dispositif d'interfaçage (2) entre un détecteur de mouvement pour bus KNX et des luminaires selon la revendication précédente, **caractérisé en ce que** l'étage d'alimentation (4) est composé d'une première alimentation à découpage apte à être raccordée au secteur et apte à fournir une double alimentation pour le bus DALI et pour une seconde alimentation linéaire.

3. Dispositif d'interfaçage (2) entre un détecteur de mouvement pour bus KNX et des luminaires selon la revendication précédente, **caractérisé en ce que** l'alimentation à découpage est un montage de type convertisseur Flyback comportant un transformateur à double enroulement de primaire et à double enroulement de secondaire en série, un étage de redressement étant apte à être disposé entre le secteur et le double enroulement primaire en série avec un commutateur et des étages de redressement/stabilisation de tension étant placés en aval de chacun des enroulements secondaires, fournissant une alimentation tension/courant respectivement au bus DALI et à la seconde alimentation linéaire.

4. Dispositif d'interfaçage (2) entre un détecteur de mouvement pour bus KNX et des luminaires selon la revendication précédente, **caractérisé en ce que** l'étage de commande (3) comporte un circuit de réception de données en provenance du bus DALI relié à la seconde alimentation et un circuit de transmission de données à destination du bus DALI, ces circuits étant aptes à être connectés au microcontrôleur via l'étage d'isolation en tension et au bus DALI via un étage de protection contre les surtensions.

5. Dispositif d'interfaçage (2) entre un détecteur de mouvement pour bus KNX et des luminaires selon la revendication précédente, **caractérisé en ce que** l'étage de protection contre les surtensions est apte à être connecté à un étage de protection contre les surcharges activable par un signal véhiculé par une ligne (EN) d'activation de commande issue du microcontrôleur.

6. Dispositif d'interfaçage (2) entre un détecteur de mouvement pour bus KNX et des luminaires selon l'une des revendications 4 et 5, **caractérisé en ce que** l'étage d'isolation en tension comporte des opto-coupleurs disposés sur les lignes (RX, TX) de connexion du circuit de réception de données et du circuit de transmission de données au microcontrôleur ainsi que sur la ligne (EN) de commande d'activation.

## Patentansprüche

1. Schnittstellenvorrichtung (2, 2') zwischen einem Bewegungsmelder (1) für KNX-Bus und Leuchten, die einem vom KNX-Bus verschiedenen Netz vom Typ DALI-Bus angehören, wobei der genannte Melder (1) ein Mikrosteuergerät aufweist, das an den KNX-Bus angeschlossen ist, **dadurch gekennzeichnet, dass** die Schnittstellenvorrichtung (2, 2') umfasst:
- eine Leuchtensteuerstufe (3, 6),
- eine Versorgungsstufe 4, 5) der Steuerstufe (3, 6), und
- eine Spannungstrennstufe zwischen den Leuchten und dem Mikrosteuergerät,
Schnittstellenvorrichtung (2, 2') **dadurch gekennzeichnet, dass** der Zustand der genannten Leuchten über einen DALI-Bus gesteuert wird, wobei die Versorgungsstufe (4) ans Stromnetz angeschlossen ist und eine Stromquelle für den DALI-Bus und eine lineare Stromquelle zum Betrieb mindestens einer Komponente der Steuerstufe (3) bereitstellt, die zwischen dem Mikrosteuergerät des Melders und den Leitungen des DALI-Bus geschaltet ist.

2. Schnittstellenvorrichtung (2) zwischen einem Bewegungsmelder für KNX-Bus und Leuchten nach dem vorangehenden Patentanspruch, **dadurch gekennzeichnet, dass** die Versorgungsstufe (4) aus einem ersten Schaltnetzteil besteht, das an das Stromnetz angeschlossen werden kann und in der Lage ist, eine doppelte Stromversorgung für den DALI-Bus und für eine zweite lineare Stromquelle bereitzustellen.

3. Schnittstellenvorrichtung (2) zwischen einem Bewegungsmelder für KNX-Bus und Leuchten nach dem vorangehenden Patentanspruch, **dadurch gekennzeichnet, dass** das Schaltnetzteil ein Aufbau vom Sperrwandler-Typ ist mit einem Transformator mit doppelter Primärwicklung und doppelter Sekundärwicklung in Reihe geschaltet, einer Gleichrichterstufe, die geeignet ist, zwischen dem Stromnetz und der doppelten Primärwicklung in Reihe mit einem Schalter angeordnet zu werden, und Gleichrichter-/Spannungsstabilisatorstufen, die jeder der Sekundärwicklungen nachgeschaltet sind, die eine Strom-/Spannungsversorgung für den DALI-Bus bzw. die zweite lineare Stromquelle bereitstellen.

4. Schnittstellenvorrichtung (2) zwischen einem Bewegungsmelder für KNX-Bus und Leuchten nach dem vorangehenden Patentanspruch, **dadurch gekennzeichnet, dass** die Steuerstufe (3) eine mit der zweiten Stromquelle verbundene Empfangsschaltung für Daten aus dem DALI-Bus und eine Schaltung zum Senden von Daten zum DALI-Bus aufweist, wobei diese Schaltungen in der Lage sind, über die Spannungstrennstufe mit dem Mikrosteuergerät verbunden zu werden und über eine Überspannungsschutzstufe mit dem DALI-Bus.

5. Schnittstellenvorrichtung (2) zwischen einem Bewegungsmelder für KNX-Bus und Leuchten nach dem vorangehenden Patentanspruch, **dadurch gekennzeichnet, dass** die Überspannungsschutzstufe geeignet ist, mit einer Überlastschutzschaltung verbunden zu werden, die durch ein Signal aktiviert werden kann, das über eine Aktivierungssteuerlinie (EN) aus dem Mikrosteuergerät gesendet wird.

6. Schnittstellenvorrichtung (2) zwischen einem Bewegungsmelder für KNX-Bus und Leuchten nach einem der Patentansprüche 4 und 5, **dadurch gekennzeichnet, dass** die Spannungstrennstufe in den Verbindungsleitungen (RX, TX) zwischen der Datenempfangsschaltung und der Datensendeschaltung zum Mikrosteuergerät, sowie in der Aktivierungsleitung (EN) angeordnete Optokoppler aufweist.

## Claims

1. Interface device (2, 2') between a motion sensor (1) for the KNX bus and lights belonging to a DALI bus type network, different from the KNX bus, said sensor (1) comprising a microcontroller connected to the KNX bus, **characterised in that** the interface device (2, 2') comprises:
- a control stage (3, 6) of the lights,
- a power supply stage (4, 5) of the control stage (3, 6) and
- an insulation voltage stage arranged between the lights and the microcontroller,
the interface device (2, 2') being **characterised in that** the state of said lights is controlled via a DALI bus, the power supply stage (4) being connected to the sector and providing a power supply for the DALI bus and a linear power supply for the functioning of at least one component of the control stage (3) being connected between the microcontroller of the sensor and the wires of the DALI bus.

2. Interface device (2) between a motion sensor for the KNX bus and lights according to the preceding claim, **characterised in that** the power supply stage (4) consists of a first switched-mode power supply connectable to the sector and able to provide a double power supply for the DALI bus and for a second linear power supply.

3. Interface device (2) between a motion sensor for the KNX bus and lights according to the preceding claim, **characterised in that** the switched-mode power supply is an flyback converter type assembly comprising a double primary winding and double secondary winding transformer in series, a rectifier stage being arranged between the sector and the double primary winding in series with a switch and voltage rectifier/stabilisation stages being placed downstream of each of the secondary windings, providing a voltage/current supply respectively to the DALI bus and to the second linear power supply.

4. Interface device (2) between a motion sensor for the KNX bus and lights according to the preceding claim, **characterised in that** the control stage (3) comprises a receiver circuit for data originating from the DALI bus connected to the second power supply and a transmission circuit for data with a destination of the DALI bus, the circuits being connectable to the microcontroller via the voltage insulation stage and to the DALI bus via a surge protection stage.

5. Interface device (2) between a motion sensor for the KNX bus and lights according to the preceding claim, **characterised in that** the surge protection stage is connectable to a surge protection stage activatable by a signal conveyed via a command activation line (EN) issued from the microcontroller.

6. Interface device (2) between a motion sensor for the KNX bus and lights according to any of claims 4 and 5, **characterised in that** the voltage insulation stage comprises optocouplers arranged on the connection lines (RX, TX) of the receiver circuit of the data and of the transmission circuit of data to the microcontroller as well as on the command activation line (EN).
